# EUROPÄISCHE PATENTSCHRIFT

(11) **EP 3 379 594 B1**
(45) Veröffentlichungstag und Bekanntmachung des Hinweises auf die Patenterteilung: **23.12.2020**
(21) Anmeldenummer: 17001313.0
(22) Anmeldetag: 01.08.2017
(51) Int. Cl.: H01M 2/10, B25F 5/00

(54) **VORRICHTUNG ZUM ENERGIESPEICHERN UND/ODER ENERGIEABGEBEN**
APPARATUS FOR STORAGE AND/OR OUTPUT OF ENERGY
DISPOSITIF D'ACCUMULATION DE L'ÉNERGIE ET/OU D'ÉMISSION DE L'ÉNERGIE

(30) Priorität: 20.03.2017 DE 102017002621
(43) Veröffentlichungstag der Anmeldung: 26.09.2018
(73) Patentinhaber: ZSKG GmbH, 64720 Michelstadt (DE)
(72) Erfinder: HOFMANN, Rainer, Prof., 64750 Lützelbach (DE)
(74) Vertreter: Baumann, Rüdiger Walter

(56) Entgegenhaltungen:
- EP-A1- 2 819 207
- WO-A2-2014/006906
- DE-U1-202010 012 387
- DE-U1-202012 013 284
- JP-A- 2016 018 602

## Beschreibung

Die Erfindung betrifft eine Vorrichtung zum Energiespeichern und/oder Energieabgeben nach dem Oberbegriff von Anspruch 1.

Bekannt ist es beispielsweise aus der WO2014/006906, elektrisch zu betreibende Arbeitseinrichtungen, insbesondere einem tragbaren Handwerkzeuge, beispielsweise mittels eines Elektrokabels aus einer stationären Stromversorgungseinrichtung, insbesondere Steckdose, und/oder mit einem Akku an dem Handwerkzeug zu betreiben. Die Akkus bei höherer Leistung sind sehr schwer, somit anstrengend zu handeln für den Nutzer, wenn sie in das Werkzeug integriert sind und eine ausreichende Leistung bereithalten sollen. Die Alternative des Generators ist emissionsbehaftet, insbesondere lärm- und abgasausstoßend Zudem ist bei kleineren Akkus die Arbeitsdauer begrenzt, was die Arbeiten aufwendig macht, da entweder nachgeladen werden oder ein Akkutausch stattfinden muss.

WO2014/006906 offenbart eine Vorrichtung zum Energiespeichern und/oder Energieabgeben, die jedoch kein Mittel zum Wechselrichten des Stroms aufweist. Offenbart ist ein Gleichrichter, über den jedoch lediglich gewandelter Strom zum Laden der Speichermedien zur Verfügung gestellt wird.

Aufgabe der vorliegenden Erfindung ist es daher, eine einfache und sichere Vorrichtung zum Energiespeichern und/oder Energieabgeben bereitzustellen, die die Nachteile des Stands der Technik vermeidet und ein flexibles Arbeiten ermöglicht.

Die Aufgabe wird gelöst durch eine Vorrichtung zum Energiespeichern und/oder Energieabgeben, die mehrfach aufladbar ist, zur Verwendung an einer von einem Nutzer tragbaren, elektrisch zu betreibenden Arbeitseinrichtung, insbesondere eines tragbaren, elektrisch zu betreibenden Handwerkzeugs und/oder Arbeitsgerät, zum Hämmern und/oder Sägen und/oder Schleifen und/oder Schrauben und/oder Bohren und/oder Trennen, einer Kettensäge und/oder einer Heckenschere, umfassend ein Mittel zum Energieaufnehmen und/oder Energieabgeben, wie einen Akkumulator, insbesondere Lithium-Ioner Akkumulatoren, ein Mittel zum Wechselrichten des Stroms aus dem Mittel zum Energieaufnehmen und/oder Energieabgeben, insbesondere Akkumulator, ein Mittel zum elektrischen Koppeln des Mittels zum Energieaufnehmen und/oder Energieabgeben an die elektrische zu betreibende Arbeitseinrichtung über das Mittel zum Wechselrichten des Stroms aus dem Mittel zum Energieaufnehmen und/oder Energieabgeben, wie einen Akkumulator, wobei das Mittel zum Energieaufnehmen und/oder Energieabgeben, wie ein Ackumulator, in Bezug auf eine, insbesondere auf und/oder in einer, mobilen, vom Nutzer während des Gebrauchs der Arbeitsvorrichtung lastmäßig trennten und durch ihn zu aktivierenden Transport- und/oder Lagereinrichtung getrennt von der elektrisch zu betreibenden Arbeitseinrichtung integriert ist, wobei zumindest der überwiegende Teil des Gewichts des Mittels zum Energieaufnehmen und/oder Energieabgeben auf der vom Nutzer lastmäßig getrennten Transport- und/oder Lagereinrichtung abgesetzt ist.

Durch die Erfindung ist es dem Nutzer sicher und einfach möglich, auch größere Leistungen für einen längeren Zeitraum für ein Arbeitsgerät mobil bereitzustellen. Die Massen von Elektrowerkzeug und Energiespeicher werden mechanisch entkoppelt, wodurch eine wesentlich verbesserte Handhabbarkeit gegeben ist. Flexible modulare Anordnung von Energiespeicher, Kabelverbindung und Elektrowerkzeug. Die Kombination von Elektrowerkzeugleistung, beispielsweise bis über 1,5kW und ununterbrochene Dauer der Leistung, beispielsweise über 1h, ist wesentlich verbessert. Bekannte und bauartbedingte Nachteile der üblichen elektrischen Energieversorgung durch Generatoren mit Antrieb durch Verbrennungskraftmaschinen, wie Lärm- und Abgasemissionen, werden vermieden Die Handhabbarkeit des Elektrowerkzeuges gegenüber üblichen integrierten Akkuelektrowerkzeugen ist wesentlich verbessert, da der massereiche Speicherakkumulator vom eigentlichen Werkzeug separiert ist, zugleich entfällt die ergonomische Belastung der arbeitenden Person durch den massereichen Speicherakkumulator. Es liegt somit eine vorteilhafte Kombination einer flexiblen Anzahl von Lithium-Ionen-Akkumulatormodulen mit einem Wechselrichter zur mobilen Versorgung von beispielsweise 230V/50Hz-Elektrowerkzeugen vor.

Die Speicherelemente sind flexibel handhabbar und können ausgetauscht und gesondert geladen werden, ohne dass die Arbeit unterbrochen werden muss. Nahezu beliebige Handgeräte können verwendet werden, so dass der Nutzer in seiner Anwendung nicht eingeschränkt ist. Arbeitsgeräte können vielfältige Elektrowerkzeuge zum Hämmern und/oder Sägen und/oder Schleifen und/oder Schrauben und/oder Bohren und/oder Trennen und dergleichen mehr sein. Die Vorrichtung kombiniert die Vor-Ort-Verfügbarkeit von elektrischer Energie in einem 230V/50Hz-Modus mithilfe einer portablen und mobilen Einrichtung ohne den Nachteil einer Abgas-und-Lärm-Emission, die die herkömmlichen mit Verbrennungsmotoren angetriebenen Generatoren haben - die man zurzeit einsetzt, wenn man Strom mit entsprechender Leistungshöhe benötigt.

Es ist beispielsweise eine angepasst variable gespeicherte Energiemenge, je nach Anzahl der verwendeten Module möglich sowie eine angepasst variable verfügbare Energieabgabe, hinsichtlich der Stromstärke, je nach Art des verwendeten Elektrowerkzeugs.

Durch die Erfindung ist ein Zweikreisgenerator für mobile Energieversorgung bereitgestellt. Durch die Wechselstromwerkzeuge/Geräte ist eine hohe Motorleistung ohne Abgas-/Schallemission möglich, wobei allgemein verfügbare Werkzeuge/Geräte einfach austauschbar angeordnet werden können bei einer hohe Betriebszuverlässigkeit.

Die Erfindung liefert eine modulare Kombination von Geräte-Chassis und Gehäuse und vorteilhaft Lithium-Ionen-Speicherakkumulatoren und einem optionalem Batterieladung-Managementsystem und einem Spannungswandler als portable und mobile Energieversorgung von Wechselstrom-Elektrowerkzeugen oder anderen Elektrogeräten.

Erfindungsbedingt einfacher gegenseitiger Austausch von Energiespeicher oder Werkzeug möglich, das optionales Batterieladung-Managementsystem erlaubt bidirektionalen Stromfluss zum Entladen und Laden auch im Stand-By-Modus des verwendeten Akkumulators. Es ist eine Vielzahl vorteilhafter Anwendungsszenarien möglich, beispielsweise im Öffentlichen Dienst, Rettungswesen, Katastrophenschutz, Handwerk, gewerblicher Wirtschaft, Rettungswesen, auch Privat- und Freizeitbereich.

Vorteilhaft ist es, wenn durch den Wechselrichter von 12 bzw. 36 Volt Gleichspannung auf 230 bzw. 110 Volt Wechselspannung zu transformieren ist.

Vorteilhaft ist es, wenn die mobile Transport- und/oder Lagereinrichtung rollbar ausgebildet ist.

Vorteilhaft ist es, wenn die mobile Transport- und/oder Lagereinrichtung im Sinne einer Zugverbindung an den Nutzer anzubinden ist, insbesondere zu ziehen und/oder zu schieben.

Vorteilhaft ist es, wenn die mobile Transport- und/oder Lagereinrichtung mittels einer Bewegungseinrichtung zu bewegen ist, insbesondere einer elektrischen Bewegungseinrichtung.

Vorteilhaft ist es, wenn das Mittel zum Energieaufnehmen und/oder Energieabgeben, wie ein Akkumulator, mehrere Speicherelemente gekoppelt und/oder gestapelt aufweist.

Vorteilhaft ist es, wenn die Speicherelemente Lithium-Ionen-Batterien umfassen, insbesondere mit einer Spannung von 12V und einer Stromstärke von 300 A.

Vorteilhaft ist es, wenn die Speicherelemente Dauerleistungen von 600 W bis 1000W aufweisen und/oder Spitzenleistungen von etwa 1200W bis 4000W.

Vorteilhaft ist es, wenn eine Verbindung des Mittels zum Energieaufnehmen und/- oder Energieabgeben, insbesondere auch des Wechselrichters, und der tragbaren, elektrisch zu betreibenden Arbeitseinrichtung über eine Standard-Kabelverbindung, insbesondere mit Stecker und Buchse, vorzunehmen ist.

Vorteilhaft ist es, wenn sie gegen Feuchtigkeit abgeschlossen ausgeführt ist, wodurch die Schutzarten bis IP66 und IP68 vorgesehen sind.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1a: eine erfindungsgemäße Vorrichtung zum Energiespeichern und/oder Energieabgeben in Seitenansicht,
- Fig. 1b: eine erfindungsgemäße Vorrichtung zum Energiespeichern und/oder Energieabgeben in Rückansicht,
- Fig. 2a: eine Teil einer erfindungsgemäßen Vorrichtung zum Energiespeichern und/oder Energieabgeben in Seitenansicht,
- Fig. 2b: eine Teil einer erfindungsgemäßen Vorrichtung zum Energiespeichern und/oder Energieabgeben in Seitenansicht,
- Fig. 3: einen Teil einer erfindungsgemäßen Vorrichtung zum Energiespeichern und/oder Energieabgeben,
- Fig. 4a: eine Teil einer erfindungsgemäßen Vorrichtung zum Energiespeichern und/oder Energieabgeben in Seitenansicht und
- Fig. 4b: eine Teil einer erfindungsgemäßen Vorrichtung zum Energiespeichern und/oder Energieabgeben in Seitenansicht.

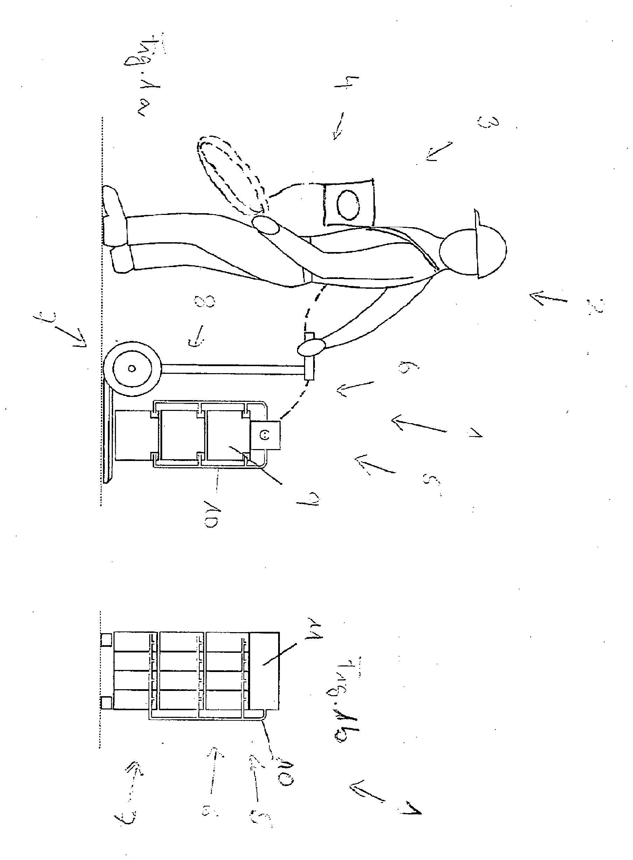

Fig. 1a zeigt eine erfindungsgemäße Vorrichtung zum Energiespeichern und/oder Energieabgeben in Seitenansicht, die mehrfach aufladbar ist, zur Verwendung an einer von einem Nutzer 2 elektrisch zu betreibenden Arbeitseinrichtung 3, insbesondere einem tragbaren Handwerkzeug 4, insbesondere zum Hämmern und/oder Sägen und/oder Schleifen und/oder Schrauben und/oder Bohren und/oder Trennen, insbesondere einer Kettensäge und/oder einer Heckenschere, umfassend: ein Mittel 5 zum Energieaufnehmen und/oder Energieabgeben, insbesondere Akkumulator, ein Mittel 6 zum elektrischen Koppeln des Mittels 5 zum Energieaufnehmen und/oder Energieabgeben an die elektrische zu betreibende Arbeitseinrichtung 3, wobei das Mittel 5 zum Energieaufnehmen und/oder Energieabgeben, insbesondere Akkumulator, in Bezug auf eine, insbesondere auf und/oder in einer, mobilen, vom Nutzer 2 im Wesentlichen während des Gebrauchs der Arbeitsvorrichtung 3 lastmäßig getrennten und durch ihn zu aktivierenden Transport- und/oder Lagereinrichtung 7 getrennt von der elektrisch zu betreibenden Arbeitseinrichtung 3 integriert ist, wobei zumindest der überwiegende Teil des Gewichts des Mittels 5 zum Energieaufnehmen und/oder Energieabgeben auf der vom Nutzer 2 lastmäßig getrennten Transport- und/oder Lagereinrichtung 7 abgesetzt ist. Mittel 5 zum Energieaufnehmen und/oder Energieabgeben, insbesondere Akkumulator, weist beispielhaft mehrere Speicherelemente 9 gekoppelt und/oder gestapelt auf mit Mittel zum Stromleiten 10 und beispielhaft einem Mittel 11 zum Regeln und/oder Steuern der Stromversorgung und/oder Speicherung.

Fig. 1b zeigt eine erfindungsgemäße Vorrichtung 1 zum Energiespeichern und/oder Energieabgeben in Rückansicht, mit einem Mittel 5 zum Energieaufnehmen und/oder Energieabgeben und einem Mittel zum Stromleiten 10 und beispielhaft einem Mittel 11 zum Regeln und/oder Steuern der Stromversorgung und/oder Speicherung.

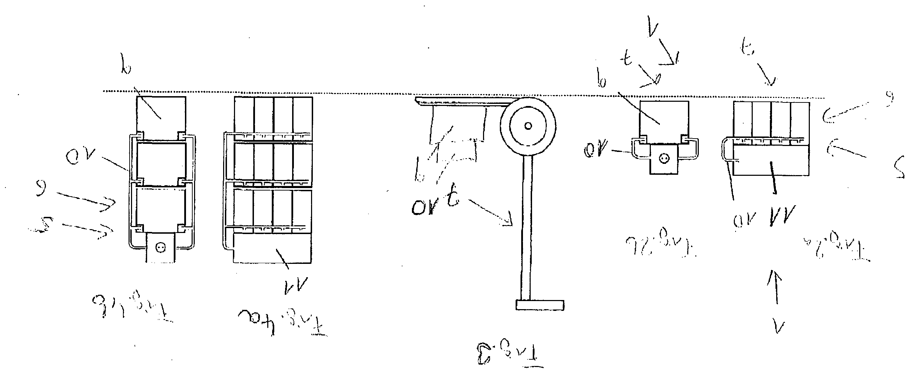

Fig. 2a zeigt eine erfindungsgemäße Vorrichtung 1 zum Energiespeichern und/oder Energieabgeben in Seitenansicht, wobei beispielhaft eine geringere Anzahl und andere Verteilung von Speicherelementen 9, insbesondere Akkumulatoren, angeordnet ist. Die Vorrichtung ist beispielhaft auch auf den Boden absetzbar ausgebildet.

Fig. 2b zeigt einen Teil einer erfindungsgemäßen Vorrichtung 1 zum Energiespeichem und/oder Energieabgeben in Rückansicht.

Fig. 3 zeigt einen Teil einer erfindungsgemäßen Vorrichtung zum Energiespeichern und/oder Energieabgeben umfassend eine mobile Transport- und/oder Lagereinrichtung 7, die rollbar ausgebildet ist.

Fig. 4a zeigt einen Teil einer erfindungsgemäßen Vorrichtung zum Energiespeichern und/oder Energieabgeben in Seitenansicht. Beispielhaft ist es auch vorteilhaft zwei Energiespeichermodule mit einem Spannungswandler mit einer Dauerleistung 600 W zu verwenden, so dass mit einer Gesamtmasse ca. 5 kg des Systems für eine Bohrmaschine (230 V / 600 W) über 15 Minuten Spitzenleistung, ca. 30 Minuten normale Arbeitsleistung ermöglicht wird oder sechs Energiespeichermodule mit einem Spannungswandler mit einer Dauerleistung 600 W zu verwenden, so dass mit einer Gesamtmasse ca. 2,5 kg des Systems für eine Bohrhammer (230 V / 900 W) oder zwölf Energiespeichermodule mit einem Spannungswandler mit einer Dauerleistung 2000 W zu verwenden, so dass mit einer Gesamtmasse ca. 25 kg des Systems für eine Elektrokettensäge (230 V / 2100 W) über 30 Minuten Spitzenleistung, bis zu 1 Std. normale Arbeitsleistung ermöglicht wird.

Beispielhaft kann ein Batteriemodul mit zwei Energiespeichermodulen 172 Wh, Spannungswandler Dauerleistung 600 W, Spitzenleistung 1200W, Abmessungen beispielsweise L 23,5 x B 10 x H 6 cm, Masse etwa 1,4 kg, montiert ca. Würfel von ca. 25 cm Kantenlänge, Gesamtmasse ca. 5 kg, tragbar verwendet werden.

Alternativ kann beispielsweise ein Batteriemodul mit sechs Energiespeichermodulen 516 Wh, Spannungswandler Dauerleistung: 1000 W, Spitzenleistung 2000 W, Abmessungen beispielsweise L 28,5 x B 13,5 x H 7,5 cm, Masse etwa 2,3 kg, montiert ca. von 75 cm mal 25 cm2 Kantenlänge, Gesamtmasse ca. 12,5 kg, tragbar, mit Tragegestell verwendet werden. Als Werkzeug kann beispielsweise angetrieben werden eine Bohrmaschine (600 W) über 45 Minuten Spitzenleistung, ca. 1,5 Std. normale Arbeitsleistung oder beispielsweise ein Bohrhammer (900 W) über 30 Minuten Spitzenleistung, ca. 1 Std. normale Arbeitsleistung.

Alternativ kann ein Batteriemodul mit zwölf Energiespeichermodulen, Spannungswandler Dauerleistung: 2000 W, Spitzenleistung 4000 W, Abmessungen: L 41,5 x B 20 x H 7,5 cm, Masse: 4,9 kg, montiert ca. von 75 cm mal 25 cm mal 50 cm Kantenlänge, Gesamtmasse ca. 25 kg, mit Tragegestell oder 2-rädrigem Rollwagen eingesetzt werden beispielsweise für eine Bohrmaschine (600 W) über 90 Minuten Spitzenleistung, ca. 3 Std. normale Arbeitsleistung oder einen Bohrhammer (900 W) über 60 Minuten Spitzenleistung, ca. 2 Std. normale Arbeitsleistung oder eine Elektrosäge (2100 W) über 30 Minuten Spitzenleistung, bis zu 1 Std. normale Arbeitsleistung. Eine Vielzahl und hohe Varietät von Elektrogeräten mit Energieversorgung (bspw. 230 Volt / 110 Volt Wechselspannung) durch Netzanbindung und Kabelzuleitung, bspw. 1000-Watt-Kaffeemaschine, 1500-Watt-Haartrockner, und dergleichen mehr.

Fig. 4b zeigt einen Teil einer erfindungsgemäßen Vorrichtung zum Energiespeichern und/oder Energieabgeben in Seitenansicht.

### BEZUGSZEICHENLISTE

- 1: Vorrichtung zum Energiespeichern und/oder Energieabgeben
- 2: Nutzer
- 3: Arbeitseinrichtung
- 4: Handwerkzeug
- 5: Mittel zum Energieaufnehmen und/oder Energieabgeben
- 6: Mittel zum elektrischen Koppeln
- 7: mobile Transport- und/oder Lagereinrichtung
- 8: Bewegungseinrichtung
- 9: Speicherelement
- 10: Mittel zum Stromleiten
- 11: Mittel zum Regeln und/oder Steuern

## Patentansprüche

1. Vorrichtung zum Energiespeichern und/oder Energieabgeben (1), die mehrfach aufladbar ist, zur Verwendung an einer von einem Nutzer (2) tragbaren, elektrisch zu betreibenden Arbeitseinrichtung (3), insbesondere eines tragbaren, elektrisch zu betreibenden Handwerkzeugs (4) oder Arbeitsgerät, zum Hämmern oder Sägen oder Schleifen oder Schrauben oder Bohren oder Trennen, einer Kettensäge oder einer Heckenschere, eine Bohrmaschine oder einen Bohrhammer, umfassend: ein Mittel (5) zum Energieaufnehmen und/oder Energieabgeben, **gekennzeichnet durch,**
- ein Mittel zum Wechselrichten des Stroms aus dem Mittel (5) zum Energieaufnehmen und/oder Energieabgeben, und
- ein Mittel (6) zum elektrischen Koppeln des Mittels (5) zum Energieaufnehmen und/- oder Energieabgeben an die elektrische zu betreibende Arbeitseinrichtung (3) über das Mittel zum Wechselrichten des Stroms,
wobei das Mittel (5) zum Energieaufnehmen und/oder Energieabgeben auf und/oder in einer, mobilen, vom Nutzer (2) während des Gebrauchs der Arbeitsvorrichtung (3) lastmäßig getrennten und durch ihn zu aktivierenden Transport- und/oder Lagereinrichtung (7) getrennt von der elektrisch zu betreibenden Arbeitseinrichtung (3) integriert ist, wobei der überwiegende Teil des Gewichts des Mittels (5) zum Energieaufnehmen und/oder Energieabgeben auf der vom Nutzer (2) lastmäßig getrennten Transport- und/oder Lagereinrichtung (7) abgesetzt ist.

2. Vorrichtung nach Anspruch 1, **dadurch gekennzeichnet, dass** durch den Wechselrichter von 12 bzw. 36 Volt Gleichspannung auf 230 bzw. 110 Volt Wechselspannung zu transformieren ist.

3. Vorrichtung nach Anspruch 1 oder 2, **dadurch gekennzeichnet, dass** die mobile Transport- und/oder Lagereinrichtung (7) rollbar ausgebildet ist.

4. Vorrichtung nach einem der Ansprüche 1 bis 3, **dadurch gekennzeichnet, dass** die mobile Transport- und/oder Lagereinrichtung (7) im Sinne einer Zugverbindung an den Nutzer (2) anzubinden ist.

5. Vorrichtung nach einem der Ansprüche 1 bis 4, **dadurch gekennzeichnet, dass** die mobile Transport- und/oder Lagereinrichtung (7) mittels einer Bewegungseinrichtung (8) zu bewegen ist.

6. Vorrichtung nach einem der Ansprüche 1 bis 5, **dadurch gekennzeichnet, dass** Mittel (5) zum Energieaufnehmen und/oder Energieabgeben mehrere Speicherelemente (9) gekoppelt und/oder gestapelt aufweist.

7. Vorrichtung nach einem der Ansprüche 1 bis 6, **dadurch gekennzeichnet, dass** die Speicherelemente (9) Lithium-Ionen-Batterien umfassen.

8. Vorrichtung nach Anspruch 7, **dadurch gekennzeichnet, dass** die Speicherelemente (9) eine Spannung von bis 12V und eine Stromstärke von bis 300 A aufweisen.

9. Vorrichtung nach einem der Ansprüche 1 bis 8, **dadurch gekennzeichnet, dass** die Speicherelemente (9) Dauerleistungen von 600 W bis 1000W aufweisen und Spitzenleistungen von 1200W bis 4000W.

10. Vorrichtung nach einem der Ansprüche 1 bis 9, **dadurch gekennzeichnet, dass** eine Verbindung des Mittels (5) zum Energieaufnehmen und/oder Energieabgeben und des Wechselrichters mit der tragbaren, elektrisch zu betreibenden Arbeitseinrichtung über eine Standard-Kabelverbindung, vorzunehmen ist.

11. Vorrichtung nach Anspruch 10, **dadurch gekennzeichnet, dass** eine Verbindung des Mittels (5) zum Energieaufnehmen und/oder Energieabgeben und des Wechselrichters mit der tragbaren, elektrisch zu betreibenden Arbeitseinrichtung über eine Standard-Kabelverbindung mit Stecker und Buchse vorzunehmen ist.

12. Vorrichtung nach einem der Ansprüche 1 bis 11, **dadurch gekennzeichnet, dass** sie gegen Feuchtigkeit abgeschlossen ausgeführt ist, wodurch die Schutzarten bis IP66 und IP68 vorgesehen sind.

13. Vorrichtung nach einem der Ansprüche 1 bis 12, **dadurch gekennzeichnet, dass** sie mit einem Batterie-Managementsystem ausgestattet ist.

14. Vorrichtung nach einem der Ansprüche 1 bis 11, **dadurch gekennzeichnet, dass** das Mittel (5) zum Energieaufnehmen und/oder Energieabgeben, als Akkumulator ausgebildet ist und der Akkumulator als Lithium-Ionen Akkumulator ausgebildet ist.

## Claims

1. Apparatus for storage and/or output of energy (1) which can be charged several times, for use on a working device (3) portable and to be operated electrically by a user (2), in particular a portable hand tool (4) or working implement to be operated electrically, for hammering or sawing or grinding or screwing or drilling or cutting, a chain saw or a hedge trimmer, a drill or a hammer drill, comprising: a means (5) for absorbing and/or emitting energy, **characterised by**,
- a means for inverting the current from the means (5) for absorbing and/or delivering energy, and
- a means (6) for electrically coupling the means (5) for absorbing and/or delivering energy to the device (3) to be operated electrically via the means for inverting the current,
wherein the means (5) for absorbing and/or emitting energy is integrated on and/or in a mobile, transport and/or storage device (7) which is load wise separated from the user (2) during the use of the working device (3) and is separated from the working device (3) to be operated electrically, wherein the predominant part of the weight of the means (5) for absorbing and/or emitting energy is deposited on the transport and/or storage device (7) which is load wise separated from the user (2).

2. Apparatus according to claim 1, **characterised in that** the inverter is to transform from 12 or 36 volts DC voltage to 230 or 110 volts AC voltage.

3. Apparatus according to claim 1 or 2, **characterised in that** the mobile transport and/or storage device (7) is designed to be rollable.

4. Apparatus according to any of claims 1 to 3, **characterised in that** the mobile transport and/or storage device (7) is to be connected to the user (2) in the sense of a pull connection.

5. Apparatus according to any of claims 1 to 4, **characterised in that** the mobile transport and/or storage device (7) is to be moved by means of a moving device (8).

6. Apparatus according to any of claims 1 to 5, **characterised in that** means (5) for absorbing and/or releasing energy have several storage elements (9) coupled and/or stacked.

7. Apparatus according to any of claims 1 to 6, **characterised in that** the storage elements (9) comprise lithium-ion batteries.

8. Apparatus according to claim 7, **characterised in that** the storage elements (9) have a voltage of up to 12V and an amperage of up to 300 A.

9. Apparatus according to any of claims 1 to 8, **characterized in that** the storage elements (9) have continuous outputs of 600 W to 1000 W and peak outputs of 1200 W to 4000 W.

10. Apparatus according to any of claims 1 to 9, **characterised in that** a connection of the means (5) for absorbing and/or emitting energy and of the inverter with the portable, electrically operated working device is to be made via a standard cable connection.

11. Apparatus according to claim 10, **characterised in that** a connection of the means (5) for energy absorption and/or energy release and of the inverter with the portable, electrically operated working device is to be made via a standard cable connection with plug and socket.

12. Apparatus according to any of claims 1 to 11, **characterised in that** it is sealed against moisture, whereby protection classes up to IP66 and IP68 are provided.

13. Apparatus according to any of claims 1 to 12, **characterised in that** it is equipped with a battery management system.

14. Apparatus according to any of claims 1 to 11, **characterised in that** the means (5) for absorbing and/or emitting energy is configured as an accumulator and the accumulator is configured as a lithium-ion accumulator.

## Revendications

1. Dispositif d'accumulation de l'énergie et/ou d'émission de l'énergie (1) qui peut être chargé plusieurs fois, destiné à être utilisé sur un dispositif de travail (3) portable et à être actionné électriquement par un utilisateur (2), en particulier un outil à main portable (4) ou un instrument de travail à actionner électriquement, pour marteler ou scier ou meuler ou visser ou percer ou couper, une scie à chaîne ou un taille-haie, une perceuse ou un marteau perforateur, comprenant : un moyen (5) d'absorption et/ou d'émission d'énergie, **caractérisé par**,
- un moyen d'inversion du courant à partir du moyen (5) d'absorption et/ou de distribution de l'énergie, et
- un moyen (6) de couplage électrique des moyens (5) d'absorption et/ou de fourniture d'énergie au dispositif (3) devant fonctionner électriquement par l'intermédiaire des moyens d'inversion du courant,
dans lequel le moyen (5) d'absorption et/ou d'émission d'énergie est intégré sur et/ou dans un dispositif mobile de transport et/ou de stockage (7) qui est séparé de l'utilisateur (2) du point de vue de la charge pendant l'utilisation du dispositif de travail (3) et est séparé du dispositif de travail (3) à faire fonctionner électriquement, dans lequel la majeure partie du poids du moyen (5) d'absorption et/ou d'émission d'énergie est déposée sur le dispositif de transport et/ou de stockage (7) qui est séparé de l'utilisateur (2) du point de vue de la charge.

2. Dispositif selon la revendication 1, **caractérisé en ce que** l'onduleur doit transformer une tension continue de 12 ou 36 volts en une tension alternative de 230 ou 110 volts.

3. Dispositif selon la revendication 1 ou 2, **caractérisé en ce que** le dispositif de transport et/ou de stockage mobile (7) est conçu pour pouvoir rouler.

4. Dispositif selon l'une des revendications 1 à 3, **caractérisé en ce que** le dispositif mobile de transport et/ou de stockage (7) doit être connecté à l'utilisateur (2) dans le sens d'une connexion en traction.

5. Dispositif selon l'une des revendications 1 à 4, **caractérisé en ce que** le dispositif mobile de transport et/ou de stockage (7) doit être déplacé au moyen d'un dispositif de déplacement (8).

6. Dispositif selon l'une des revendications 1 à 5, **caractérisé en ce que** les moyens (5) d'absorption et/ou d'émission d'énergie comportent plusieurs éléments de stockage (9) couplés et/ou empilés.

7. Dispositif selon l'une des revendications 1 à 6, **caractérisé en ce que** les éléments de stockage (9) comprennent des batteries au lithium-ion.

8. Dispositif selon la revendication 7, **caractérisé en ce que** les éléments de stockage (9) ont une tension allant jusqu'à 12 V et un ampérage allant jusqu'à 300 A.

9. Dispositif selon l'une des revendications 1 à 8, **caractérisé en ce que** les éléments de stockage (9) ont des puissances continues de 600 W à 1000 W et des puissances de crête de 1200 W à 4000 W.

10. Dispositif selon l'une des revendications 1 à 9, **caractérisé en ce qu'**une connexion des moyens (5) d'absorption et/ou d'émission d'énergie et de l'onduleur avec l'appareil de travail portable à commande électrique doit être effectuée par l'intermédiaire d'une connexion par câble standard.

11. Dispositif selon la revendication 10, **caractérisé en ce qu'**une connexion des moyens (5) d'absorption et/ou d'émission d'énergie et de l'onduleur avec l'appareil de travail portable à commande électrique doit être réalisée par l'intermédiaire d'une connexion par câble standard avec fiche et prise.

12. Dispositif selon l'une des revendications 1 à 11, **caractérisé en ce qu'**il est étanche à l'humidité, des classes de protection allant jusqu'à IP66 et IP68 étant prévues.

13. Dispositif selon l'une des revendications 1 à 12, **caractérisé en ce qu'**il est équipé d'un système de gestion de la batterie.

14. Dispositif selon l'une des revendications 1 à 11, **caractérisé en ce que** le moyen (5) d'absorption et/ou d'émission d'énergie est configuré comme un accumulateur et l'accumulateur est configuré comme un accumulateur au lithium-ion.
